# EUROPEAN PATENT APPLICATION

(11) **EP 1 510 948 A2**
(43) Date of publication of application: **02.03.2005**
(21) Application number: 04255067.3
(22) Date of filing: 23.08.2004
(51) Int. Cl.: G06F 17/30

(54) **Search system, search program, and personal computer**

(30) Priority: 29.08.2003 JP 2003306807; 12.04.2004 JP 2004116794; 25.05.2004 JP 2004154637
(71) Applicant: SEIKO EPSON CORPORATION, Shinjuku-ku, Tokyo 163-0811 (JP)
(72) Inventor: Tanaka, Takashige, Seiko Epson Corporation, Nagano-ken 392-8502 (JP); Kasai, Tsuneo, Seiko Epson Corporation, Nagano-ken 392-8502 (JP); Nagayasu, Kazuyoshi, Seiko Epson Corporation, Nagano-ken 392-8502 (JP)
(74) Representative: Cloughley, Peter Andrew

(57) **Abstract**

A search system and a search program using a web browser are provided that enable even a beginner to easily search for a desired text from a character string in a natural language, which is a question sentence, by inputting this character string, in a personal computer having no margin for operating an HTTP server. A search system has: an interface unit for starting an interface component corresponding to an installed browser by utilizing a browser function capable of interpreting a script contained in a file of HTML format, and accessing a search component through the interface component; and a search engine unit started by the search component and adapted for interpreting an inputted character string and searching for data corresponding to the character string in a database in accordance with the result of the interpretation.

## Description

### [Technical Field]

This invention relates to a search system, a search program, and a personal computer that enable efficient search for desired text data on the basis of an inputted natural language.

### [Background Art]

Currently, in various occasions such as intranets and the Internet, a search system is prepared and used frequently.

That is, storage and distribution of texts are carried out popularly and a search system is an important tool for searching for a desired text from many texts.

Conventionally, in most cases of intranets, an HTTP server is started on a public server and search from an HTTP page is performed by utilizing a server side script (for example, ASP, CGI or PHP).

On the other hand, in the case when a user searches for an arbitrary text on a hard disk in a personal computer (PC), specification margins are not large enough to start an HTTP server, or in many cases, an HTTP server is not installed originally.

Therefore, in a search function or the like of a help function, key words contained in texts are extracted in advance by morphological analysis, then an application is started, and search for a desired text is performed on the basis of the key words (see JP-A-2001-67363).

### [Disclosure of the Invention]

### [Problems that the Invention is to Solve]

However, in the above-described search processing, the user must start a special application and enter key words into an input section when carrying out the search function. Therefore, the above-described search processing has a problem that for a beginner who rarely uses the help function and is not familiar with the help search function, it is not easy to use this function.

Moreover, since key words must be entered in the above-described search processing, it has a problem that, for example, it is easy to find the status of malfunction but it is difficult for a beginner to properly extract words for acquiring desired information and carry out search in proper order

For example, when "the printer does not operate properly", the user enters a word "printer". There are plural items under the item of printer, and the user must select one of these items for analyzing the status of malfunction. This operation is difficult for a user who is not familiar with it.

In view of the foregoing status of the art, it is an object of this invention to provide a search system and a search program utilizing a web browser that enables easy search for a desired text from a character string in a natural language, which is a question sentence, by inputting this character string without using an HTTP server.

### [Means for Solving the Problems]

A search system according to this invention has: an interface unit for starting an interface component corresponding to an installed browser by utilizing a browser function capable of interpreting a script contained in a file of HTML format, and accessing a search component through the interface component; and a search engine unit started by the search component and adapted for interpreting an inputted character string and searching for data corresponding to the character string in a database in accordance with the result of the interpretation.

Thus, in the search system according to this invention, a search component is accessed by utilizing an object call (DLL load) function for a script or applet of browser installed in a personal computer, and a search engine unit is started. Therefore, a search system utilizing a web browser can be constructed without operating an HTTP server.

Moreover, in the search system according to this invention, a question sentence is entered as a character string in a natural language, as in the case of entry of search key words to a browser that is usually used for search in the Internet, and the inputted question sentence is analyzed and search for a desired text corresponding to this question sentence is carried out. Therefore, it is advantageous that even a beginner who is not familiar with the help search function can easily search for a desired text.

Furthermore, in the search system according to this invention, since description by the interface unit is a HTML script sentence, it can be easily changed. As correspondence to the installed browser is made, the system can be easily transferred by changing the script sentence.

In the search system according to this invention, the interface unit has a search unit for detecting which browser is installed, from installation information(registry information for Windows (trademark registered) or preference information for Mac-OS (trademark registered) of a component) stored in an installation storage unit (for example, an installation information storage unit 4 in an embodiment).

In the search system according to this invention, the installed browser can be supported whichever it is, and even when the type of browser is changed, plural browsers can be supported without re-installing the system or troublesome processing such as changes of setting.

Thus, in the search system according to this invention, the interface unit detects the type of the browser installed in the personal computer without the user's notice. As the user enters a character string, search for desired data is easily performed.

In the search system according to this invention, the search unit in the interface unit has a table on which relations between plural browsers and interface components corresponding to the individual browsers are described.

In the search system according to this invention, the interface unit has a judgment unit for extracting from the table an interface component corresponding to a browser detected by the search unit.

Thus, in the search system according to this invention, when which browser is installed is detected from the installation information stored in the installation information storage unit, an interface component corresponding to the detected browser is easily selected from the table, and the selected component can be loaded and used. Therefore, the interface unit can support each of the plural browsers.

In the search system according to this invention, the search unit has: a text database for recording text data of a search object; a morphological analysis dictionary database in which data for morphological analysis is recorded in advance; a morphological analysis unit for performing morphological analysis of a character string inputted from an input unit with reference to the morphological analysis dictionary database so as to extract a word, and specifying an affirmative form or negative form of the word; a search condition preparation unit for preparing a search condition based on information specifying the affirmative form or negative form of the word; and a text search unit for searching for text data matching the search condition from the text database.

In the search system according to this invention, since an affirmative/negative flag is registered to the search database at the time of morphological analysis in text registration, finding a text of totally opposite meaning can be prevented. Particularly at the time of troubleshooting processing, text data having totally opposite meaning is not necessary and therefore desired text data can be efficiently found. Moreover, since texts containing synonyms for a word acquired as a result of morphological analysis of a question sentence are searched for, desired text data can be found more easily.

A search program according to this invention is operable in a computer. The search program includes: processing for an interface unit to start an interface component of description corresponding to an installed browser by utilizing a browser function capable of interpreting a script contained in a file of HTML format, and to access a search component through the interface component; and processing for a search engine unit to be started by the search component and to interpret an inputted character string and search for data corresponding to the character string in a database in accordance with the result of the interpretation.

The search program according to this invention includes script search processing to detect which browser is installed, from installation information stored in a storage unit.

A personal computer according to this invention has: a manual storage unit in which a manual text of HTML format is stored; a browser capable of interpreting a script contained in the manual text; an interface unit for starting an interface component corresponding to the browser and accessing a search component through the interface component; a text database for storing text data of a search object; a search engine unit started by the search component and adapted for interpreting an inputted question sentence and searching for the text data of the search object in accordance with the result of the interpretation; and an installation information storage unit in which information about installed various applications and data is stored.

### [Brief Description of the Drawings]

Embodiments of the present invention will now be described by way of further example only and with reference to the accompanying drawings, in which:
Fig. 1 is a block diagram showing an exemplary structure of the search system according to an embodiment of this invention.
Fig. 2 is a block diagram showing an exemplary structure of the search engine unit 5 of Fig. 1.
Fig. 3 is a flowchart for explaining an operation of starting a manual file of HTML format.
Fig. 4 is a flowchart showing an example of search component loading operation (starting the search engine unit 5).
Fig. 5 is a flowchart showing an example of search operation by the search engine unit 5.
Fig. 6 is a flowchart showing an example of processing to install the search system of Fig. 1 into a computer.
Fig. 7 is a block diagram showing a structure in a personal computer according to an embodiment of this invention.

This invention is a search system for inputting a character string in a natural language into a search condition input section, as in an ordinary search method on the Internet, and searching for a desired text in a user's personal computer, by using a browser having a component call function for Active X (trademark registered) or JAVA (trademark registered) applet or the like held by Internet Explorer (trademark registered) provided in advance in Windows (trademark registered) or the like. In this case, a search engine performs morphological analysis of the inputted character string and extracts a necessary key word (search condition).

The component such as Active X or JAVA (trademark registered) applet transmits the key word and the result of search between a script contained in a file of HTML format having a function of starting search processing and the search engine unit for performing search (that is, the search engine unit started by the search component). That is, in this invention, processing to start natural language search and transmission of data are carried out between the script contained in the file of HTML format and the search engine unit, using the browser function installed in the personal computer in advance.

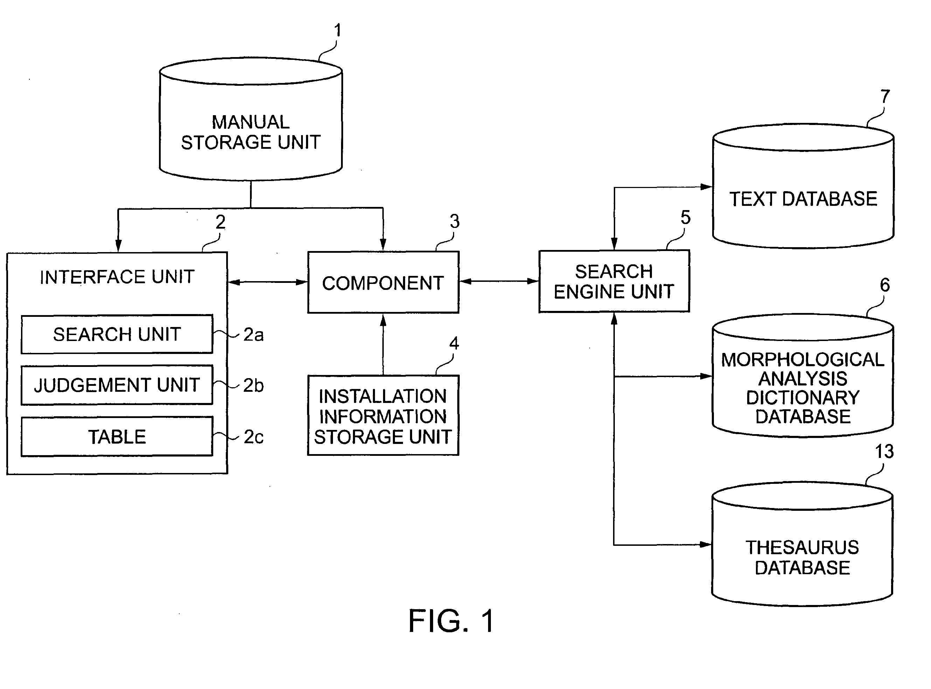

Hereinafter, a search system according to an embodiment of this invention will be described with reference to the drawings. Fig. 1 is a block diagram showing the structure of the embodiment. In a manual storage unit 1, a manual such as operating manual of an external device (for example, printer, scanner, CRT or the like) connected to a personal computer (PC) is described by HTML and stored.

When the manual is selected, a browser set in advance in the personal computer for reading a file of HTML format is started and this browser interprets and executes a script text of the manual. An interface unit 2 is thus started. As the interface unit 2 is started, it uses an execution interface function to access a component (hereinafter referred to as interface component) described in accordance with the description format (command format), which is a browser, and then starts this component. The interface function is a function of processing the script text for accessing the interface component described in the manual by HTML.

The component 3 similarly starts the interface component, accesses DLL (search component) for starting a search engine unit 5, and carries out transmission of data (character string of question sentence and result of search) between the started search engine unit 5 and the interface unit 2. The interface unit 2 has a search unit 2a for retrieving the type of search browser from an installation information storage unit 4, a judgment unit 2b for judging whether the retrieved search browser can be used by a table 2c or not, and the table 2c shows the relation between each search browser and the interface component corresponding to each search browser.

The interface component is described in the command format of the corresponding browser. For example, in the case of Windows (trademark registered), the interface component is described in a format corresponding to Active X (trademark registered) held by Internet Explorer (trademark registered). Alternatively, it is described in a format corresponding to JAVA (trademark registered) applet. The interface component has a function of accessing the search component that starts the search engine unit 5, which will be described later. In the installation information storage unit 4, information of applications installed in the personal computer, directory information of the component of the search engine unit 5, and directory information of each of a text database 7, a morphological analysis dictionary database 6 and a thesaurus database 13, are stored.

The interface component is described with contents corresponding to each search browser and has the function of accessing the search component, as described above. Here, the search browser is a browser that has a browser function such as Active X (trademark registered) of Internet Explorer (of Windows (trademark registered) system) or the like, or JAVA (trademark registered) applet (of Macintosh (trademark registered)), installed together with an operating system (OS), and that can interpret an HTML text and describe a script text for accessing DLL by HTML.

Other than the above-described types of browsers, other browsers that can be accessed by an HTML script text and that can access DLL by an HTML script text can also be used, though not installed at the time of installing the OS. Hereinafter, the other browsers, Active X (trademark registered) and JAVA (trademark registered) applet are generally referred to as search browsers.

The search engine unit 5 performs morphological analysis of an inputted character string by using the morphological analysis dictionary database 6 and thus extracts a key word. In the morphological analysis dictionary database 6, dictionary data for morphological analysis of texts are recorded. The search engine unit 5 also searches for desired text data corresponding to a character string, that is, a question sentence, by the keyword search in the text database 7, and outputs the result of the search. In the text database 7, plural text data of search objects are recorded.

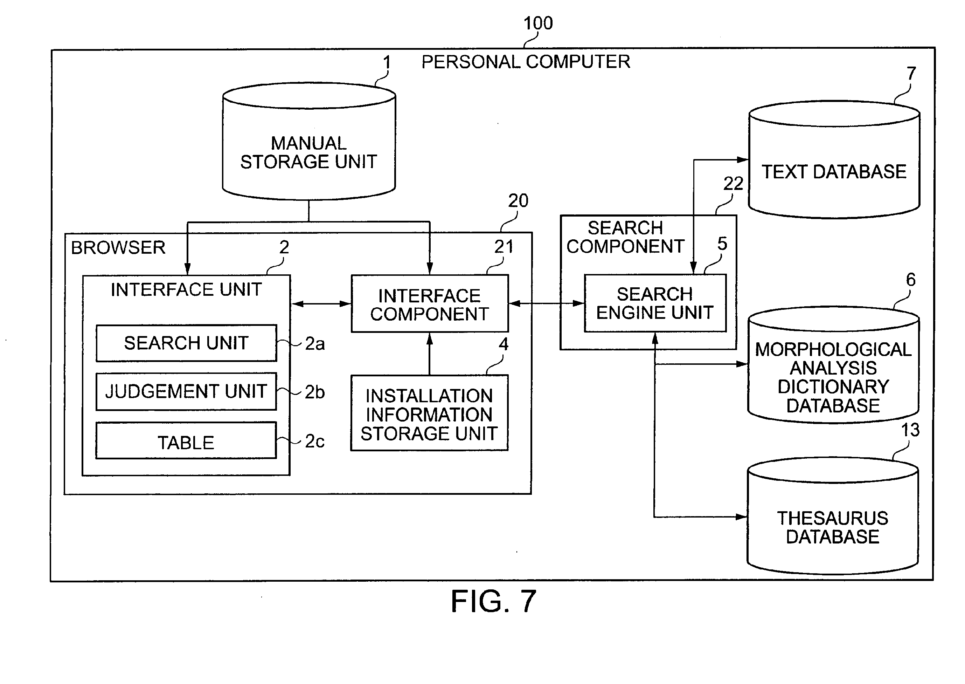

Fig. 7 shows a block structure in the personal computer of the above-described embodiment. Fig. 7 shows the relation between each element of the search system shown in Fig. 1, a browser 20, an interface component 21 and a search component 22, in a personal computer 100.

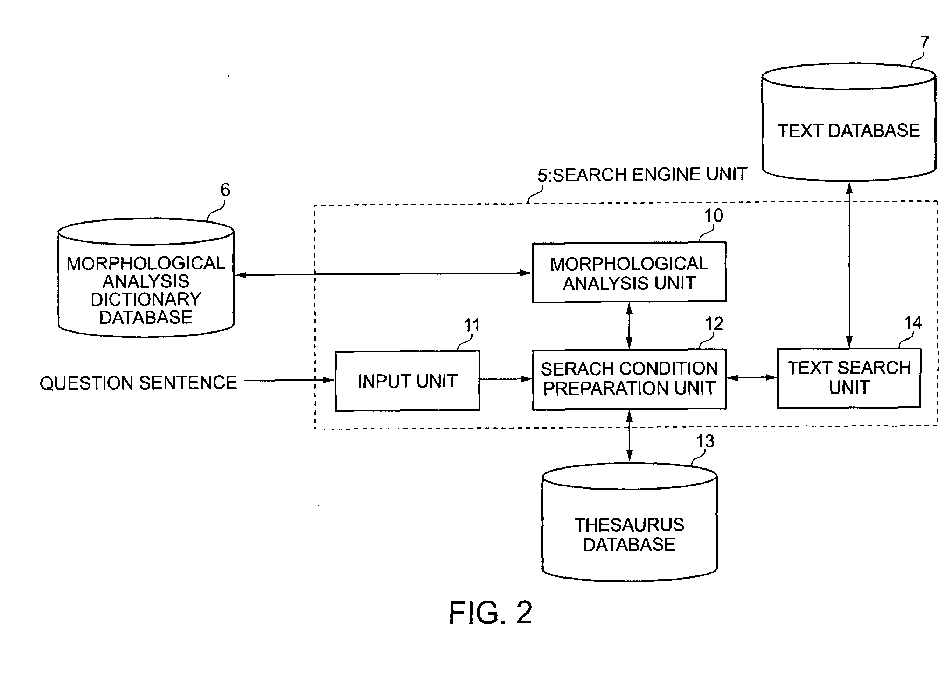

Next, the structure of the search engine unit 5 will be described with reference to Fig. 2. Fig. 2 is a block diagram showing an exemplary structure of the search engine unit 5. In Fig. 2, the text database 7, the morphological analysis dictionary database 6 and the thesaurus database 13 are the databases shown in Fig. 1.

A morphological analysis unit 10 performs morphological analysis of a character string of a question sentence inputted through an input unit 11, with reference to the morphological analysis dictionary database 6. The input unit 11 is an input unit for inputting a character string of a question sentence for finding desired text data, from the component 3. A search condition preparation unit 12 prepares a search condition (key word) from the character string in order to efficiently search for an answer to the question sentence inputted through the input unit 11. As the search condition, for example, the search condition preparation unit 12 finds a synonym for a word acquired as a result of morphological analysis of the question sentence with reference to the thesaurus database 13. In the thesaurus database 13, synonyms are associated and recorded with each word that is frequently used. A text search unit 14 performs search according to the search condition prepared by the search condition preparation unit 12.

In the text database 7, the association of a word and a text corresponding to the word is stored divisionally into an index part and a data part. That is, in the index part, a part of a word, and leading addresses in the data part of a group of words containing this part of the word, are associated and described. In the data part, all the data of the word, and text addresses indicating addresses where texts containing this word are stored, are stored for each group of words containing the part of the word. The text data of the texts are stored in another area.

Therefore, since the text search unit 14 searches for a text in the data unit, at the address acquired in the index part, as will be described later, the text search unit 14 can perform high-speed search for a text based on a word from the text database 7.

Moreover, as morphological analysis of a sentence is performed, independent words and appending words can be acquired and also inflections of the individual words can be acquired. In this embodiment, words are classified into verbs, adjectives, adjectival verbs, and nouns at the time of registration to the text database 7. The parts of speech of inflections (parts of speech of appending words) are not registered in principle. However, an "affirmative/negative flag" is provided for each of adjectives, adjectival verbs, verbs and the like. In the case of "affirmation", the "affirmative/negative flag" is set at 0. In the case of "negation", the "affirmative/negative flag" is set at 1.

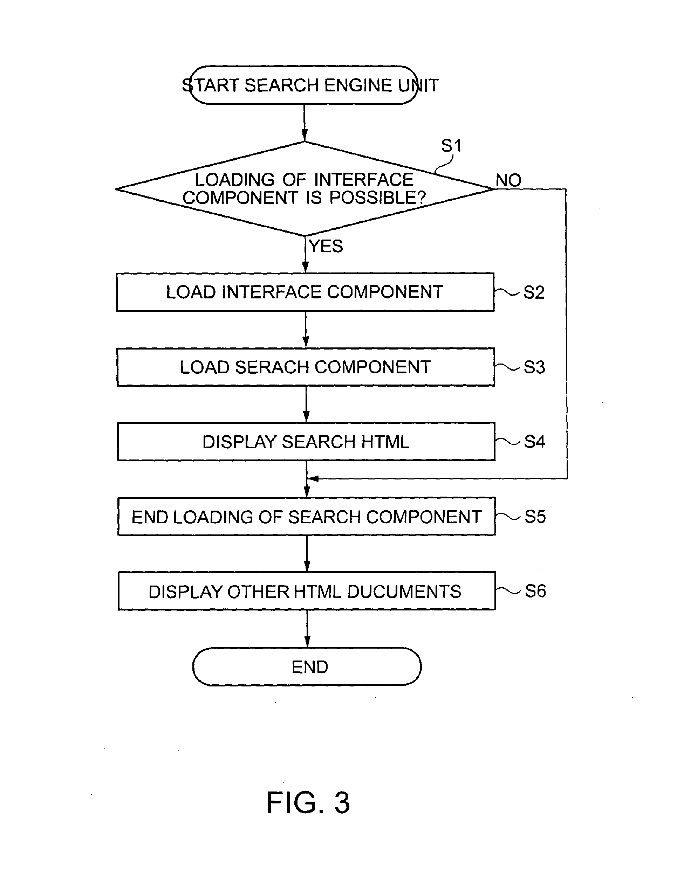

Next, an exemplary operation of loading a search component according to one embodiment and starting the search engine unit 5 will be described with reference to Figs. 1, 2 and 3. Fig. 3 is a flowchart showing the operation of starting the search engine unit 5. In the following description, processing to retrieve a printer manual is described as an exemplary operation in the search system.

A user uses a mouse to click an icon of a printer manual of HTML format installed in advance in the personal computer and displayed on the CRT screen. This starts the browser capable of interpreting HTML loaded on the personal computer. The browser interprets a HTML script text of the printer manual and the interface unit 2 is started to start processing to load the search component.

Next, the search unit 2a in the interface unit 2 retrieves the browser installed in the personal computer, from the installation information storage unit 4. Then, the judgment unit 2b judges whether this browser is set as a search browser or not.

At this point, if the judgment unit 2 detects that the browser retrieved from the installation information storage unit 4 is set in the table 2c as a search browser, the judgment unit 2b determines that the search engine unit 5 is available for use (the interface component can be loaded), and the processing goes to step S2. On the other hand, if the judgment unit 2b detects that the browser retrieved from the installation information storage unit 4 is not set in the table 2c as a search browser, the judgment unit 2b determined that the search engine unit 5 is not available for use, and the processing goes to step S5. (This processing is at step S1.)

Next, the interface unit 2 loads the interface component that is judged to be available for use from a predetermined DLL storage area, then unfolds it on the memory, and starts the search component, that is, the component 3. The browser started in this manner has been installed at the time of installing the OS. If the OS is Windows (trademark registered), the browser is Active X (trademark registered) or JAVA (trademark registered) applet. If the OS is Mac-OS-X (trademark registered), the browser is one from the JAVA (trademark registered) applet group. (This processing is at step S2.)

The component 3 has a function of accessing the search component of the search engine unit 5 (that is, a function of accessing the search component of the search engine unit 5 based on the description of an HTML script text). The component 3 retrieves the search component from the DLL storage area, loads and unfolds it on the memory, and starts the search engine unit 5 (step S3). Thus, the component 3 displays on the CRT screen a search window including an input section to which a character string of a question sentence used for search is inputted (step S4) and ends the start processing of the search engine unit 5 (step S5). Then, the interface unit 2 displays other HTML expressions such as the cover of the printer manual, in a part adjacent to the search window (step S6). As this is done, the interface unit 2 ends the loading of the printer manual from the manual storage unit 1.

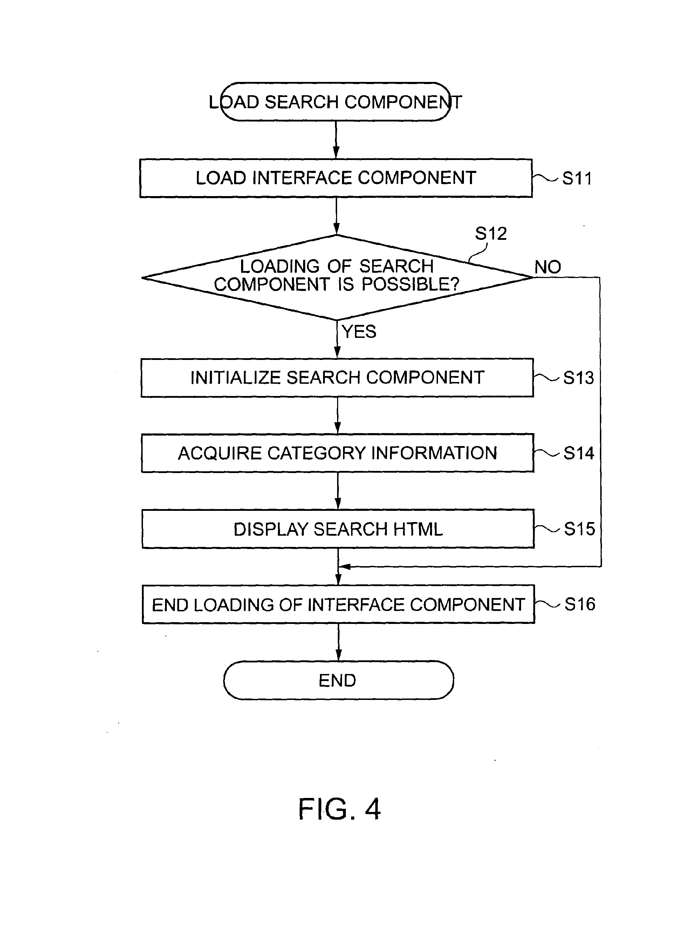

Next, the operation of loading the search component by the component 3 will be described with reference to Fig. 4. Fig. 4 is a flowchart showing an example of the search component loading operation (corresponding to steps S2 and S3 in Fig. 3) by the component 3.

The interface unit 2 loads the interface component of the component 3, and the component 3 is started (step S11). As the component 3 is started, it is judged whether loading of the search component is possible or not, by processing described by a HTML script text. If loading is possible, the search component is loaded and the processing goes to step S13. If loading is not possible, the processing goes to step S16. That is, display of search HTML is skipped (This processing is at step S12).

Next, when the search component is loaded and the search engine unit 5 is thus started, the component 3 reads out the directory information of the morphological analysis dictionary database 6, the text database 7, the thesaurus database 13 and the like from the installation information storage unit 4, and performs initialization necessary for search processing in the search engine unit 5 (step S13). Then, the component 3 acquires a search category to be displayed on the search HTML, for example, from the manual storage unit 1 (step S14). This search category is formed by classification depending on the type of text of a search target, in order to narrow the search range. For example, for the printer manual, categories such as "printing method," "trouble," and "software" are prepared.

Next, the component 3 displays the search window including the input section to which a question sentence for search is inputted and a selection part for selecting the search category, on the CRT screen (step S15). Then, the interface unit 2 ends the loading of the interface component of the component 3, and the component 3 ends the initialization of the search engine unit 5 (step S16).

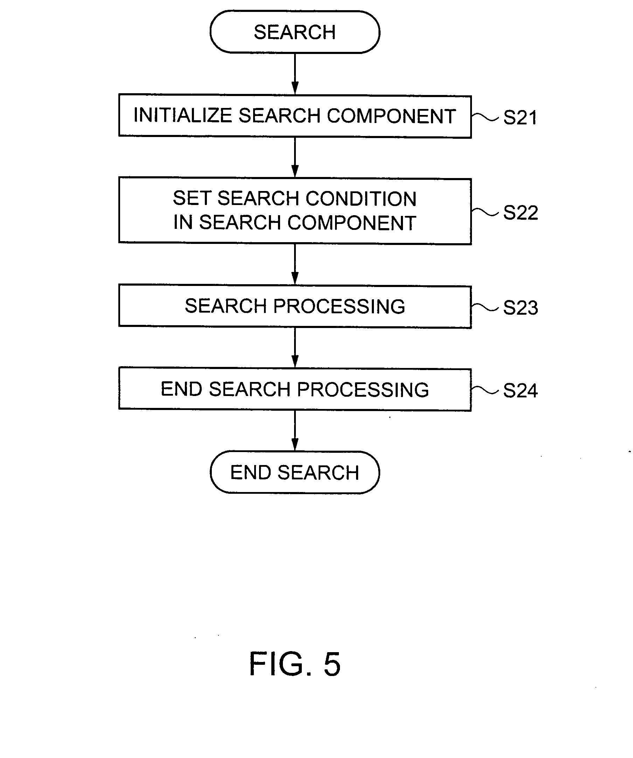

Next, the operation of search processing carried out by the search engine unit 5 will be described with reference to Fig. 5. Fig. 5 is a flowchart showing an exemplary operation of search processing by the search engine unit 5.

As described at step S13 in Fig. 4, initialization necessary for the search processing by the search engine unit 5 is carried out (step S21). The search engine unit 5 acquires a search category from the selection part, thus narrows the range of search objects, then performs morphological analysis of a character string inputted from the interface unit 2 through the component 3, and performs analysis and extraction of a search condition (step S22).

That is, at step S22, the input unit 11 reads the inputted question sentence. In this embodiment, it is assumed that a character string "the printer does not operate properly" is inputted. The input unit 11 sends the inputted character string to the search condition preparation unit 12. Next, the search condition preparation unit 12 sends the received question sentence to the morphological analysis unit 10. Having received this question sentence, the morphological analysis unit 10 performs morphological analysis of the received question sentence with reference to the morphological analysis dictionary database 6. As the result of this analysis, "noun: printer" and "verb: operate (negative form)" are acquired.

Then, the morphological analysis unit 10 sends back the acquired result of the analysis to the search condition preparation unit 12.

Next, the search condition preparation unit 12 prepares a search condition based on the result of the morphological analysis. In this embodiment, the search condition is "noun: printer & verb: operate (negative/affirmative flag = 1)". The search condition preparation unit 12 sends the prepared search condition to the text search unit 14.

At step S23, the text search unit 14 searches the text database 7, using the search condition received from the search condition preparation unit 12 (step S23). As the result of this search, the text search unit 14 acquires page ID of text data containing the noun "printer" and also containing the verb "operation (negative form)" from the text database 7. If there are plural text data that meet the search condition, the text search unit 14 acquires plural page IDs. Then, the text search unit 14 notifies the search condition preparation unit 12 of the completion of search. Then, the search condition preparation unit 12 rearranges the page IDs of the result of the search by the text search unit 14, in the order of text data on the basis of preset degree of importance, weighting value, or order of titles (for example, order of the Japanese syllabary or alphabetical order), and then outputs the rearranged result of the search to the text search unit 14 (step S24). Next, the interface unit 2 displays the text of the rearranged result of the search inputted from the text search unit 14, on a CRT (cathode ray tube) or the like through the component 3.

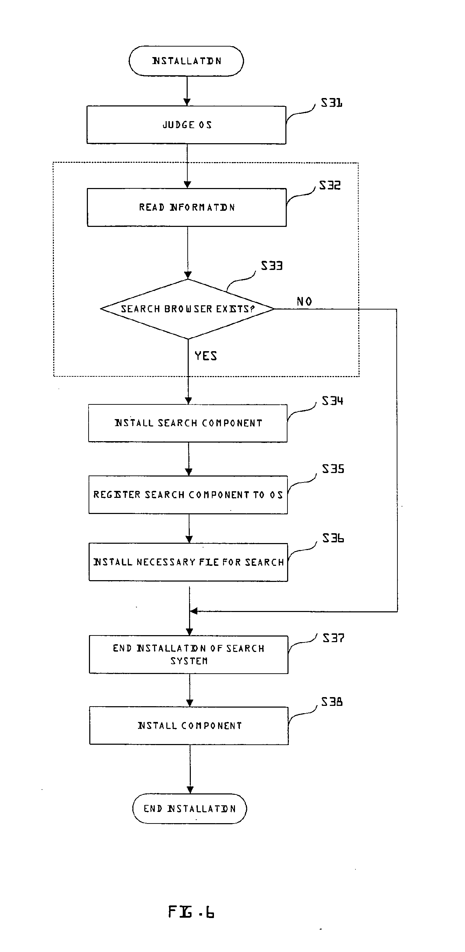

Next, processing to install the search system according to this invention to a personal computer will be described. Fig. 6 is a flowchart for explaining an exemplary operation of installation. The installation is performed using a CD-ROM (compact disc read-only memory) on which an installation program and files necessary for the search system are stored.

As the user starts the installation processing, the installer is unfolded and started on the memory of the personal computer. This installer (installation unit) judges the type of the OS installed in the personal computer, for example, Windows (trademark registered) or Mac-OS (trademark registered) (step S31).

Next, the processing shifts to installation of the search component. In the case of the structure of the interface unit 2 shown in Fig. 1, when the interface unit 2 is started, the type of the installed search browser is detected and the call DLL corresponding to this search browser is used. Therefore, since retrieval and judgment of the search browser need not be carried out, steps S32 and S33 are skipped and these steps are not executed in the installation operation. That is, the installer shifts the processing from step S31 to step S34 and performs processing to install the search component.

For example, if the installer detects that the OS is Windows (trademark registered) at step S31, the installer associates a search component corresponding to Active X (trademark registered) in Internet Explorer (trademark registered), a search component corresponding to JAVA (trademark registered) applet and the like with the types of individual search browsers and installs the search components in the form of the table 2c of the interface unit 2 (step S34).

Then, the installer registers all the installed types of search components to the installation information storage unit 4 (step S35). Next, the installer installs other files to be used for search, that is, files in the search unit 2a and the judgment unit 2b of the interface unit 2, the component of the search engine unit 5, the morphological analysis dictionary database 6 and the text database 7 (step S36), and ends the installation processing (step S37). Then, the installer installs files or the like of the printer manual (step S38).

On the other hand, in the case of installing a search component corresponding to a search browser that is installed in advance, unlike the structure of the interface unit 2 of Fig. 1, the processing of steps S32, S33 in Fig. 6 is executed.

After the type of the OS is detected at step S31, the installer detects which search browser is installed, in the installation information storage unit 4 (step S32).

When a search browser is detected, the installer shifts the processing to step S34. If no search browser is detected, the installer shifts the processing to step S37 (step S33). Next, the installer installs a search component corresponding to the search browser (step S34). The subsequent processing is similar to the processing of steps S35 to S38, which is already described above. At step S37, in the interface unit 2 where installation is carried out, the files of the search unit 2a, the judgment unit 2b and the table 2c does not exist, and only a function of loading the installed search component is installed without retrieving the installed search browser.

The search processing in the search system may also be performed by recording a program for realizing the function of the processing unit in Fig. 1 onto a computer-readable recording medium and then causing a computer system to read and execute the program recorded on the recording medium. The "computer system" in this case may include OS and hardware such as peripheral devices. The "computer system" may also include a world wide web system having a homepage providing environment (or display environment). The "computer-readable recording medium" may be a portable medium such as a flexible disk, magneto-optical disc, DVD-ROM or CD-ROM, or a storage device such as a hard disk arranged in a computer system. Moreover, the "computer-readable recording medium" may include a recording medium that holds a program for a predetermined time, such as a volatile memory (RAM) within a computer system, which serves as a server or client when the program is transmitted through a network such as the Internet or a communication channel such as a telephone line.

The program may be transmitted from a computer system having this program stored in its storage device or the like to another computer system through a transmission medium or through transmission waves in the transmission medium. In this case, the "transmission medium" transmitting the program is a medium having a function of transmitting information, such as a network (communication network) like the Internet or a communication channel (communication line) like a telephone line. The program may be for realizing a part of the above-described functions. The program may be a program that can realize the above-described functions in combination with a program that is already recorded in a computer system, that is, a differential file (differential program).

The foregoing description has been given by way of example only and it will be appreciated by a person skilled in the art that modifications can be made without departing from the scope of the present invention.

## Claims

1. A search system comprising:
an interface unit for starting an interface component corresponding to an installed browser by utilizing a browser function capable of interpreting a script contained in a file of HTML format, and accessing a search component through the interface component; and
a search engine unit started by the search component and adapted for interpreting an inputted character string and searching for data corresponding to the character string in a database in accordance with the result of the interpretation.

2. The search system as claimed in claim 1, wherein the interface unit has a search unit for detecting which type of browser is installed, from installation information stored in an installation storage unit.

3. The search system as claimed in claim 1 or 2, wherein the interface unit has a table on which relations between plural browsers and interface components corresponding to the individual browsers are described.

4. The search system as claimed in claim 3, wherein the interface unit has a judgment unit for extracting from the table an interface component corresponding to a browser detected by the search unit.

5. The search system as claimed in one of claims 1 to 3, wherein the search unit has:
a text database for recording text data of a search object;
a morphological analysis dictionary database in which data for morphological analysis is recorded in advance;
a morphological analysis unit for performing morphological analysis of a character string inputted from an input unit with reference to the morphological analysis dictionary database so as to extract a word, and specifying an affirmative form or negative form of the word;
a search condition preparation unit for preparing a search condition based on information specifying the affirmative form or negative form of the word; and
a text search unit for searching for text data matching the search condition from the text database.

6. A search program that can be executed by a computer, the program comprising:
processing for an interface unit to start an interface component corresponding to an installed browser by utilizing a browser function capable of interpreting a script contained in a file of HTML format, and to access a search component through the interface component; and
processing for a search engine unit to be started by the search component and to interpret an inputted character string and search for data corresponding to the character string in a database in accordance with the result of the interpretation.

7. The search program as claimed in claim 6, wherein the interface processing includes processing to detect which browser is installed, from installation information stored in an installation information storage unit.

8. A personal computer comprising:
a manual storage unit in which a manual text of HTML format is stored;
a browser capable of interpreting a script contained in the manual text;
an interface unit for starting an interface component corresponding to the browser and accessing a search component through the interface component;
a text database for storing text data of a search object;
a search engine unit started by the search component and adapted for interpreting an inputted question sentence and searching for the text data of the search object in accordance with the result of the interpretation; and
an installation information storage unit in which information about installed various applications and data is stored.

9. The personal computer as claimed in claim 8, wherein the interface unit has a search unit for detecting which type of browser is installed, from the information stored in the installation storage unit.

10. The personal computer as claimed in claim 8 or 9, wherein the interface unit has a table on which relations between plural browsers and interface components corresponding to the individual browsers are described.

11. The personal computer as claimed in claim 10, wherein the interface unit has a judgment unit for extracting from the table an interface component corresponding to a browser detected by the search unit.

12. The personal computer as claimed in one of claims 8 to 11, further comprising a morphological analysis dictionary database in which data for morphological analysis is recorded in advance, and a thesaurus database in which a synonym for each of frequently used words is associated and stored with each word,
wherein the search engine unit has:
a morphological analysis unit for analyzing the question sentence with reference to the morphological analysis dictionary database so as to extract a word, and specifying an affirmative form or negative form of the word;
a search condition preparation unit for preparing a search condition including a synonym for the word extracted by analyzing the question sentence, with reference to the thesaurus database; and
a text search unit for searching for a text matching the search condition from the text database.
